# EUROPEAN PATENT APPLICATION

(11) **EP 2 015 534 A2**
(43) Date of publication of application: **14.01.2009**
(21) Application number: 08007596.3
(22) Date of filing: 18.04.2008
(51) Int. Cl.: H04L 27/26

(54) **DVB receiver with diversity**

(30) Priority: 19.06.2007 JP 2007161013
(71) Applicant: Alps Electric Co., Ltd., Tokyo 145-8501 (JP)
(72) Inventor: Oyama, Toru c/o ALPS Electric Co., Ltd., Tokyo 145-8501 (JP); Tanaka, Ryoichi c/o ALPS Electric Co., Ltd., Tokyo 145-8501 (JP); Yamamoto, Hiromi c/o ALPS Electric Co., Ltd., Tokyo 145-8501 (JP)
(74) Representative: Klunker . Schmitt-Nilson . Hirsch

(57) **Abstract**

In a vehicle-mounted terrestrial digital receiver, each tuner (2a to 2d) is located in a tuner-side casing (26) of a connector circuit section 25 provided at a power feeding point of a corresponding one of a plurality of digital-television-broadcast-receiving antenna devices (1a to 1d). Output terminals of the tuners (2a to 2d) are connected to a demodulation-system-side casing (10) using balanced signal cables (12a to 12d). The demodulation-system-side casing 10 contains OFDM demodulators (5a to 5d) that decode IF signals output from the corresponding tuners (2a to 2d), combining units (6a to 6c) that combine demodulated signals to generate a combined signal, and an MPEG decoder (7) that decodes the combined signal.

## Description

### BACKGROUND OF THE INVENTION

### 1. Field of the Invention

The present invention relates to digital-television-broadcast-receiving diversity apparatuses for performing diversity reception of digital television broadcast signals by using a plurality of antenna devices.

### 2. Description of the Related Art

In vehicle-mounted terrestrial digital receivers of the related art, diversity reception is performed using a plurality of antennas and tuners for improving the reception performance (for example, see Japanese Unexamined Patent Application Publication No. 2005-167890). The plurality of tuners individually demodulate signals, and the demodulated signals are combined, thereby achieving a practical reception performance.

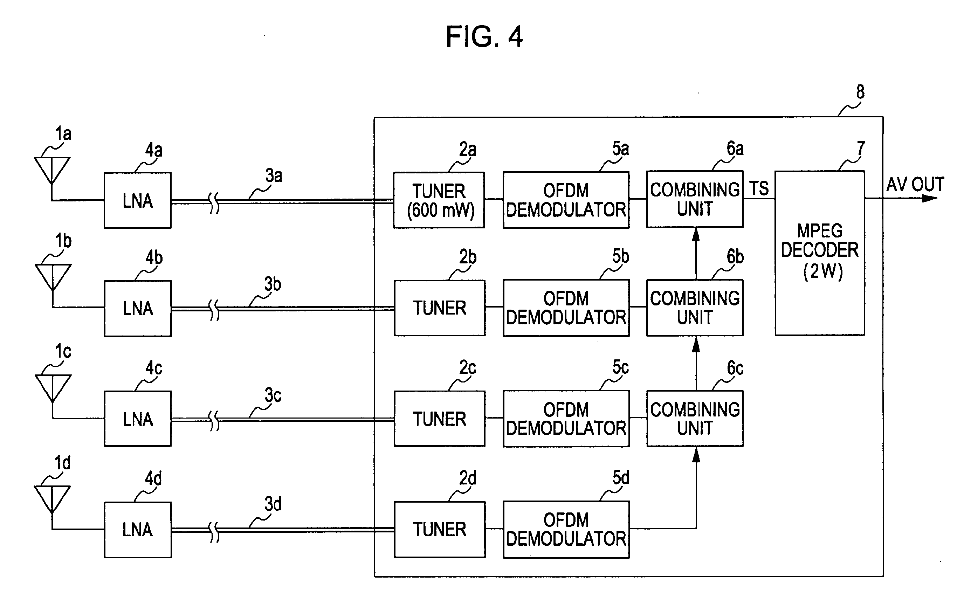

Fig. 4 illustrates an exemplary structure of a vehicle-mounted terrestrial digital receiver of the related art. Antenna devices 1a to 1d are individually connected to terrestrial receiving tuners 2a to 2d. The antenna devices 1a to 1d and the terrestrial receiving tuners 2a to 2d are connected via coaxial cables 3a to 3d, respectively. In general, low noise amplifiers (LNAs) 4a to 4d are connected to antenna base ends where power feeding points of the antenna devices 1a to 1d are located in order to compensate for loss of the antennas 1a to 1d. Signals individually amplified by the LNAs 4a to 4d are input in parallel to the tuners 2a to 2d. The tuners 2a to 2d select a required frequency band, amplify the signals to a signal level needed for orthogonal frequency division multiplexing (OFDM) demodulation, and output the amplified signals to OFDM demodulators 5a to 5d located at the subsequent stage of the tuners 2a to 2d. Signals individually demodulated by the OFDM demodulators 5a to 5d are combined by combining units 6a to 6d to generate a combined signal in a transmission stream (TS) format, which is input to a Moving Picture Experts Group (MPEG) decoder 7. A single casing 8 contains the tuners 2a to 2d, the OFDM demodulators 5a to 5d, the combining units 6a to 6c, and the MPEG decoder 7. The casing 8 is connected to the antennas 1a to 1d via the coaxial cables 3a to 3d which have a length of a few meters (such as 5 m to 7 m).

In the terrestrial digital receiver of the related art, the single casing 8 contains the tuners 2a to 2d, the OFDM demodulators 5a to 5d, and the MPEG decoder 7. The tuners 2a to 2d require a great amount of power in order to reduce distortion, and the OFDM demodulators 5a to 5d and the MPEG decoder 7 require a considerable amount of power in order to process signals with a great amount of information over a wide band. These devices generate heat in the casing 8, resulting in a high temperature in the casing 8. In order to maintain reliability, heat dissipation measures must be taken.

Many electronic components must be contained in a small space in the single casing 8. Among these electronic components, digital devices (e.g., the MPEG decoder 7) generate, besides clock signals, many harmonics of the clock signals. These harmonics of the clock signals generated by the digital devices may overlap a reception broadcast band and enter tuners as jamming signals, resulting in significant deterioration of the reception performance. In order to combat the jamming signals, for example, shielding may be enhanced, a radio wave absorbent may be used, or a multilayer substrate may be used. In order to take these measures, a great amount of time is necessary to design these elements. The jamming signals cannot be completely eliminated.

Since the performance of the terrestrial digital antennas is directly related to the size of a coverage area, the performance of the antennas is regarded of great importance in order to maintain the performance of the apparatus. For vehicle-mounted terrestrial digital antennas, the coaxial cables 3a to 3d which generally have a length of 5 m to 7 m are used. In the related art, power loss of coaxial cables has been compensated for by using LNAs provided at the antennas. At the same time, high-insulation dual-shielding cables are used as the coaxial cables for anti-jamming purpose. This results in an increase in the cost of the terrestrial digital antennas. As has been described above, a 4-channel diversity reception apparatus requires four antennas. Thus, the cost of the product becomes very high.

### SUMMARY OF THE INVENTION

The present invention provides a digital-television-broadcast-receiving diversity apparatus which can avoid an increase in the temperature of internal devices, reduce the cost required for heat dissipation, improve reliability, reduce the effect of reception jamming due to harmonics of clock signals generated by digital devices, and maintain high sensitivity, and whose size and cost can be reduced.

A digital-television-broadcast-receiving diversity apparatus according to an aspect of the present invention includes a plurality of antenna devices configured to receive a digital television broadcast; a plurality of tuners individually connected to and located near the plurality of antenna devices, the plurality of tuners being configured to convert input signals individually input from the plurality of antenna devices into intermediate frequency (IF) signals; a subsequent-stage circuit located at a distance from the plurality of antenna devices, the subsequent-stage circuit being configured to demodulate the IF signals output from the plurality of tuners, to combine the demodulated signals to obtain a broadcast signal, and to decode the broadcast signal; and a plurality of cables connecting output terminals of the plurality of tuners to the subsequent-stage circuit.

With the structure, since the tuners are individually located near the antenna devices, and the output terminals of the tuners are connected to the subsequent-stage circuit via the cables, the tuners are located at a distance from a casing containing electronic components constructing the subsequent-state circuit. Thus, heat generated in the subsequent-stage-circuit-side casing can be reduced, and the cost of taking heat dissipation measures can be reduced. Since the tuners are individually connected via the cables to the subsequent-stage circuit and the tuners are located at a sufficient distance from the subsequent-stage circuit, the effect of harmonics of clock signals generated by a digital device included in the subsequent-stage circuit, which serve as jamming signals, on the tuners can be reduced. Without taking special measures to combat spurious responses, the required reception sensitivity can be ensured. Since IF signals that are frequency-converted by the tuners are transmitted to the subsequent-stage circuit via signal cables, anti-jamming measures can be easily taken, compared with the case where radio frequency (RF) signals output from the antenna devices are transmitted. Thus, LNAs can be eliminated.

Input terminals of the plurality of tuners may be directly connected to output terminals of the plurality of antenna devices without using cables.

With the structure, RF signals are directly input from the output terminals of the antenna devices to the input terminals of the tuners. This reduces a reduction in the reception sensitivity due to spurious jamming waves, and the signals can be input to the tuners with low power loss.

A connector section configured to connect each of the plurality of antenna devices to a corresponding one of the plurality of cables may contain a corresponding one of the plurality of tuners.

The plurality of cables connecting the output terminals of the plurality of tuners to the subsequent-stage circuit may be balanced signal cables.

According to the aspect of the present invention, an increase in the temperature of devices can avoided, and the cost required for heat dissipation can be reduced. Furthermore, reliability can be improved, and the effect of reception jamming due to harmonics of clock signals generated by digital devices can be reduced. High sensitivity can be maintained, and the size and cost can be reduced.

### BRIEF DESCRIPTION OF THE DRAWINGS

Fig. 1 is a block diagram of a vehicle-mounted terrestrial digital receiver according to an embodiment of the present invention;
Fig. 2 is a diagram of an antenna device including a film antenna according to the embodiment;
Fig. 3 is a sectional view taken along the line III-III of Fig. 2; and
Fig. 4 is a block diagram of a terrestrial digital receiver of the related art.

### DESCRIPTION OF THE PREFERRED EMBODIMENTS

An embodiment of the present invention is described in detail below with reference to the drawings.

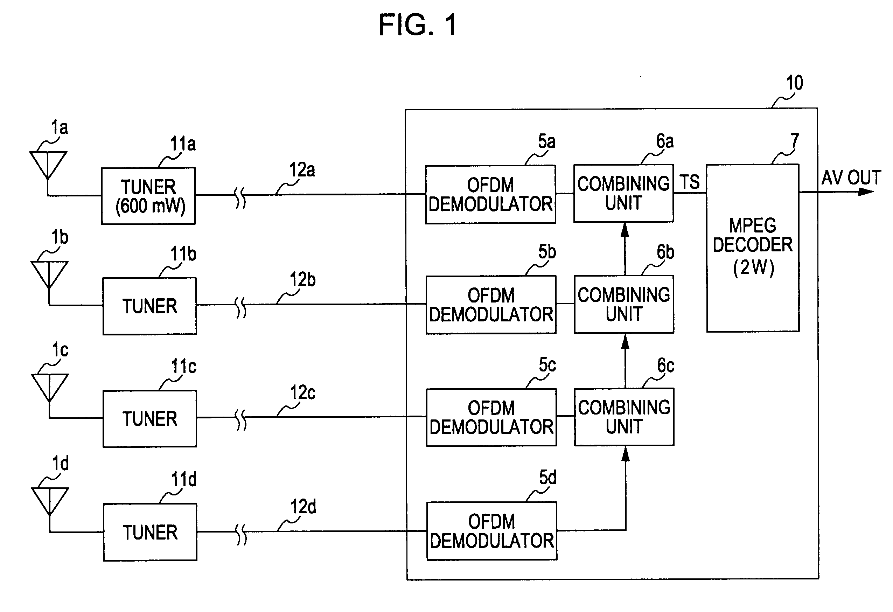

Fig. 1 is a block diagram of a vehicle-mounted terrestrial digital receiver using a digital-television-broadcast-receiving diversity apparatus according to an embodiment of the present invention. The same components as those of a vehicle-mounted terrestrial digital receiver shown in Fig. 4 are denoted by the same reference numerals.

In the present embodiment, terrestrial reception tuners (hereinafter simply referred to as "tuners") 11a to 11d are located outside of a casing (hereinafter referred to as a "demodulation-system-side casing" in order to distinguish this from a casing containing the tuners) 10 containing OFDM demodulators 5a to 5d, combining units 6a to 6c, and an MPEG decoder 7. The tuners 11a to 11d are individually located near antenna devices 1a to 1d.

In the example of the related art shown in Fig. 4, output terminals of LNAs 4a to 4d located near power feeding points of antenna devices 1a to 1d are at a distance of a few meters from a casing 8 which contains tuners 2a to 2d and which is connected to the LNAs 4a to 4d via coaxial cables 3a to 3d. In the present embodiment, the tuners 11a to 11d are provided near power feeding points of the antenna devices 1a to 1d, and coaxial cables that have been provided between the antennas and the tuners are eliminated.

Output terminals of the tuners 11a to 11d are connected to the demodulation-system-side casing 10 via balanced signal cables 12a to 12d, respectively. The tuners 11a to 11d output IF signals at a frequency (e.g., 4 MHz) lower than that of RF signals that have been transmitted using the coaxial cables 3a to 3d in the example of the related art. Therefore, a required performance can be ensured by using the balanced signal cables 12a to 12d allowing differential signal transmission, without using high-insulation dual-shielding coaxial cables for anti-jamming purpose.

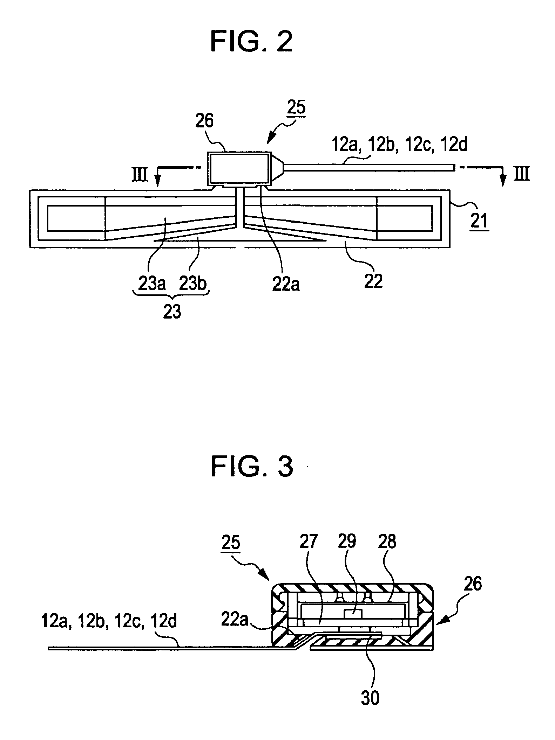

Fig. 2 illustrates an exemplary structure of any one of the antenna devices 1a to 1d including film antennas. Fig. 3 is a sectional view taken along the line III-III of Fig. 2. In the case where the antenna devices 1a to 1d are vehicle-mounted antenna devices, the antenna devices 1a to 1d are provided at the left and right ends of a rear window (or a windshield) of a vehicle and construct a diversity antenna.

A film antenna section 21 shown in Fig. 2 is a center-fed half-wave dipole antenna. A radiation conductor pattern 23 is formed on a long strip-shaped resin film 22. A tongue portion 22a is provided in a protruding state at one side of a longitudinal central portion of the resin film 22. A pair of power feeding terminals is formed on the tongue portion 22a. The radiation conductor pattern 23 includes a long main-radiation conductor portion 23a to which power is directly supplied by the power feeding terminals and a sub-radiation conductor portion 23b to which power is indirectly supplied via the main-radiation conductor portion 23a. A longitudinal central portion of the main-radiation conductor portion 23a is connected to the power feeding terminals. When the main-radiation conductor portion 23a is caused to resonate due to power fed from the power feeding terminals, the sub-radiation conductor portion 23b resonates at a slightly different frequency. Thus, the structure can operate as a wideband dipole antenna.

A connector circuit section 25 is provided near the film antenna section 21. The connector circuit section 25 includes an insulating casing (hereinafter referred to as a "tuner-side casing" in order to distinguish this from the demodulation-system-side casing 10) 26, a circuit substrate 27 on which one of the tuners 11a to 11d and the like are provided, a shield casing 28 that is arranged upright on the circuit substrate 27 and that electromagnetically shields electronic components (not shown), a pair of electrode pins 29 electrically and mechanically connected to the circuit substrate 27, and a cushion member 30 formed of an elastic resin plate. In the tuner-side casing 26, one of two ends of a corresponding one of the balanced signal cables 12a to 12d is connected to the circuit substrate 27 and the shield casing 28.

Advantages of the apparatus with the foregoing structure are described below.

It is assumed that the power consumed by the MPEG decoder 7, which requires large power in the demodulation-system-side casing 10, is 2W, the power consumed by the OFDM demodulators 5a to 5d and the combining units 6a to 6c is 500 mW, and the power consumed by one tuner is 600 mW. In the present embodiment, the four tuners 11a to 11d are outside the demodulation-system-side casing 10. Thus, the power consumed by the electronic devices contained in the demodulation-system-side casing 10 is reduced to about 2.5 W. Heat generated by the electronic devices in the demodulation-system-side casing 10 is reduced. Therefore, the structure for heat dissipation can be simplified, and the cost of taking heat dissipation measures can be reduced.

In the example of the related art shown in Fig. 4, since the four tuners 2a to 2d are contained in the casing 8, the total power consumed by the electronic devices in the casing 8 is about 5 W, which is twice as large as the power consumed in the demodulation-system-side casing 10 of the present embodiment. Thus, the amount of heat generated in the casing 8 is much greater than that generated in the demodulation-system-side casing 10 according to the present embodiment. In the example of the related art, sufficient heat dissipation measures must be taken in order to secure reliability.

In the present embodiment, each of the tuners 11a to 11d is contained in the tuner-side casing 26, which is provided near the power feeding point of a corresponding one of the antenna devices 1a to 1d. IF signals at a lower frequency (e.g., 4 MHz) output from the tuners 11a to 11d are transmitted to the demodulation-system-side casing 10. Therefore, as has been described above, the required performance can be ensured by transmitting signals using the balanced signal cables 12a to 12d, instead of using coaxial cables.

In the case where RF signals are transmitted using the coaxial cables 3a to 3d, a loss of about 3 dB occurs about every 5 meters in each of the coaxial cables 3a to 3d. It is thus necessary to amplify the signals using the LNAs 4a to 4d on the antenna device side. In contrast, according to the present embodiment, since the balanced signal cables 12a to 12d can be used, power loss is smaller than that in the case of coaxial cables. The performance can be maintained even when the LNAs 4a to 4d are eliminated. Therefore, expensive dual-shielding coaxial cables can be eliminated, the number of which is the number of diversity reception channels. Additionally, the LNAs 4a to 4d can be eliminated. The cost of avoiding reception jamming can be reduced, and hence, the cost of the apparatus can be reduced.

The tuners 11a to 11d are provided near the antenna devices 1a to 1d, which are located at a distance of a few meters from the demodulation-system-side casing 10 containing the MPEG decoder 7. An output of each of the antenna devices 1a to 1d is immediately converted into an IF signal, and the IF signal is supplied to the demodulation-system-side casing 10. Even when harmonics of clock signals of the MPEG decoder 7 and the like overlap a reception broadcast band, the effect of the harmonics on the tuners 11a to 11d, which are placed at a distance of a few meters from the MPEG decoder 7, is negligible. Special measures to combat spurious responses (that is, enhanced shielding, use of a radio wave absorbent, and use of a multilayer substrate) need not be taken. The cost of taking measures to combat spurious responses can be reduced.

In the foregoing description, film antennas are used in the antenna devices 1a to 1d. However, the present invention is applicable to antenna devices including antennas other than film antennas. According to the required performance or application, LNAs may be provided at the previous stage of the tuners 11a to 11d. Alternatively, the present invention is applicable to apparatuses other than vehicle-mounted terrestrial digital receivers.

The present invention is applicable to a terrestrial digital receiver that can perform diversity reception of digital television broadcast signals.

## Claims

1. A digital-television-broadcast-receiving diversity apparatus comprising:
a plurality of antenna devices (1a to 1d) configured to receive a digital television broadcast;
a plurality of tuners (11a to 11d) individually connected to and located near the plurality of antenna devices (1a to 1d), the plurality of tuners (11a to 11d) being configured to convert input signals individually input from the plurality of antenna devices (1a to 1d) into intermediate frequency signals;
a subsequent-stage circuit located at a distance from the plurality of antenna devices (1a to 1d), the subsequent-stage circuit being configured to demodulate the intermediate frequency signals output from the plurality of tuners (11a to 11d), to combine the demodulated signals to obtain a broadcast signal, and to decode the broadcast signal; and
a plurality of cables (12a to 12d) connecting output terminals of the plurality of tuners (11a to 11d) to the subsequent-stage circuit.

2. The apparatus according to Claim 1, wherein input terminals of the plurality of tuners (11a to 11d) are directly connected to output terminals of the plurality of antenna devices (1a to 1d) without using cables.

3. The apparatus according to Claim 1 or 2, wherein a connector section (25) configured to connect each of the plurality of antenna devices (1a to 1d) to a corresponding one of the plurality of cables (12a to 12d) contains a corresponding one of the plurality of tuners (11a to 11d).

4. The apparatus according to any one of Claims 1 to 3, wherein the plurality of cables (12a to 12d) connecting the output terminals of the plurality of tuners (11a to 11d) to the subsequent-stage circuit are balanced signal cables (12a to 12d).

5. A vehicle-mounted terrestrial digital receiver comprising a digital-television-broadcast-receiving diversity apparatus as set forth in any one of Claims 1 to 4.
